# EUROPÄISCHE PATENTSCHRIFT

(11) **EP 0 889 666 B1**
(45) Veröffentlichungstag und Bekanntmachung des Hinweises auf die Patenterteilung: **19.07.2006**
(21) Anmeldenummer: 98110438.3
(22) Anmeldetag: 08.06.1998
(51) Int. Cl.: H04Q 11/04

(54) **Verfahren zum Betreiben eines ISDN-Netzabschlusses**
Method for operating an ISDN network termination
Procédé de fonctionnement d'une terminaison de réseau RNIS

(30) Priorität: 03.07.1997 DE 19728467
(43) Veröffentlichungstag der Anmeldung: 07.01.1999
(73) Patentinhaber: Infineon Technologies AG, 81669 München (DE)
(72) Erfinder: Schmidtlein, Dieter, 81379 München (DE); Alger-Meunier, Michael, Dr., 85540 Haar (DE); Höfer, Gerald, 86853 Langerringen (DE)
(74) Vertreter: Reinhard - Skuhra - Weise & Partner

(56) Entgegenhaltungen:
- EP-A- 0 627 865
- EP-A- 0 668 706
- EP-A- 0 691 796
- EP-A- 0 741 500
- US-A- 5 157 656
- US-A- 5 404 491
- "ISDN ORIENTED MODULAR (IOM) ARCHITECTURE - SECOND GENERATION ISDN ICS, IOM-2 INTERFACE" ICS FOR COMMUNICATIONS, 1989, Seite 68, XP002018364

## Beschreibung

Die Erfindung betrifft ein Verfahren zum Betreiben eines intelligenten ISDN-Netzabschlusses mit interner Vermittlungsfunktion mit einer SO-Schnittstelle, einer U-Schnittstelle, mindestens einem Codec/Filter und einem Datenbus zu ihrer Verbindung.

Ein derartiger Netzabschluß, der üblicherweise als NT (Network Termination) bezeichnet wird, stellt im ISDN den Übergang von Gesamtnetz zu einem ISDN-Basisanschluß (SO) eines Teilnehmers dar. Im betreiberseitigen Netz werden die Daten auf einem Zwei-Draht übertragen, während teilnehmerseitig ein Vier-Draht vorgesehen ist. Der Netzabschluß stellt physikalisch die Umsetzung einer sogenannten Zwei-Draht-U-Schnittstelle auf eine sogenannte Vier-Draht-S0-Schnittstelle dar. Nutzdaten in den beiden Informationskanälen (B-Kanäle) und einem Steuerkanal (D-Kanal) werden im Vollduplexbetrieb transparent ausgetauscht. Da nur ein D-Kanal zur Verfügung steht und an der SO-Schnittstelle acht Terminals angeschlossen werden können, ist in der SO-Schnittstelle ein Arbitrierungsmechanismus vorhanden, der sicherstellt, daß kein Terminal dauerhaft vom D-Kanalzugriff ausgeschlossen bleibt. Grundsätzlich kann ein Netzabschluß nur digital übertragende ISDN-fähige Endgeräte anschließen und keine interne Vermittlung zwischen den angeschlossenen Endgeräten durchführen.

Ein sogenannter intelligenter Netzabschluß ist dagegen zusätzlich in der Lage, D-Kanaldaten zu erzeugen oder zu manipulieren. Manipuliert werden D-Kanaldaten z.B. in sogenannten bilingualen Netzabschlüssen, die unterschiedliche ISDN-Signalisierungsprotokolle beherrschen. Erzeugt werden D-Kanaldaten, wenn über eine zusätzliche, spezielle Schnittstelle andere als ISDN-Terminals angeschlossen werden. Mit einem solchen intelligenten Netzabschluß können sowohl digitale ISDN-fähige Endgeräte als auch analoge Terminals betrieben werden, die über einen a/b-Terminal-Adapter angeschlossen werden.

Darüber hinaus kann ein intelligenter Netzabschluß mit einem Schaltmatrixbaustein ausgerüstet werden, mit welchem eine Vermittlung auch zwischen zwei intern angeschlossenen Endgeräten durchgeführt werden kann. Ein derartiger intelligenter Netzabschluß mit Vermittlungsfunktion entspricht daher einer kleinen Nebenstellenanlage mit ISDN-Basisanschluß an das Netz über die U-Schnittstelle.

Dabei ist für jedes Endgerät ein fest vorgegebener Zeitschlitz vorgesehen, in dem die Daten des betreffenden Endgeräts ausschließlich übertragen werden. Für eine Vermittlungskapazität von beispielsweise acht internen Endgeräten müssen redundant acht Zeitschlitze zur Verfügung gestellt werden, wobei maximal zwei Endgeräte unter Belegung von zwei Zeitschlitzen miteinander verbunden werden können.

Ein solches system ist zum Beispiel offenbart in Dokument EP 0 668 706 A.

Der Erfindung liegt die **Aufgabe** zugrunde, ein Verfahren der eingangs genannten Art anzugeben, mit dem ein intelligenter Netzabschluß mit Vermittlungsfunktion auf besonders einfache Weise betrieben werden kann und gleichzeitig die zugehörige Schaltung vereinfacht wird.

Die Lösung der Aufgabe erfolgt mit den im Anspruch 1 enthaltenen Merkmalen. Bevorzugte Weiterbildungen der Erfindung sind in den abhängigen Ansprüchen beschrieben.

Ein Grundgedanke der Erfindung besteht demnach darin, daß in einem an sich bekannten Datenbus, bevorzugt dem IOM2-Bus, eines Netzabschlusses eine interne Vermittlung zwischen den angeschlossen Terminals mittels programmierbarer Zeitschlitze erfolgt, in welche die B-Kanaldaten der aktiven Verbindungen wahlweise stromaufwärts oder stromabwärts gelegt werden. Dabei liegt der D-Kanal zur Vermittlung in einem ersten Kanal des Datenbusses, bevorzugt im IOM-Kanal 0. Der D-Kanal zu den Terminals an der S-Schnittstelle liegt in einem anderen Kanal, bevorzugt im IOM-Kanal 1. Die Erfindung hat den Vorteil, daß ein Vermittlungsbaustein für dieses Verfahren nicht mehr benötigt wird.

Nachfolgend wird ein Ausführungsbeispiel der Erfindung anhand einer Zeichnung weiter erläutert. Es zeigen schematisch:
- Fig. 1: eine Darstellung eines intelligenten Netzab schlusses;
- Fig. 2: ein Blockschaltbild eines intelligenten Netzabschlusses mit Vermittlungsfunktion zur Durchführung des erfindungsgemäßen Verfahrens; und
- Fig. 3: eine Darstellung der erfindungsgemäßen Daten busstruktur.

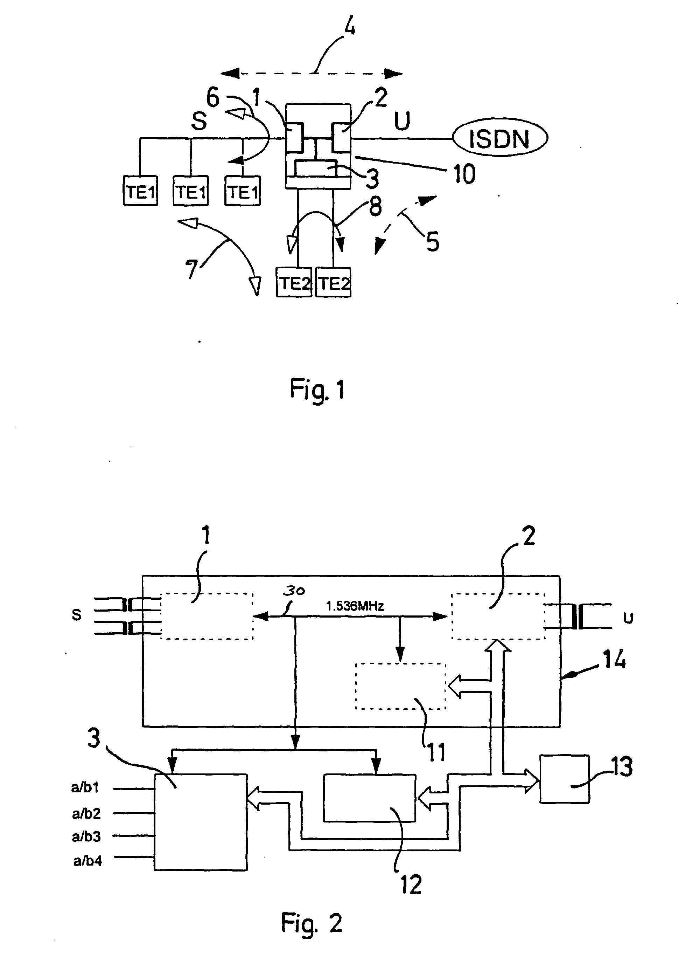

In Fig. 1 ist ein Netzabschluß 10 schematisch dargestellt. Er umfaßt eine S-Schnittstelle 10, an welchem über eine Vierdrahtleitung mehrere digital übertragende ISDN-fähige Endgeräte (Terminals TE1) angeschlossen sind. Ferner ist eine Zweidraht- U-Schnittstelle 2 zum betreiberseitigen ISDN-Netz vorhanden. Mehrere analog übertragende teilnehmerseitige Endgeräte (analoge Terminals TE2) sind über einen Codec-Filterbaustein angeschlossen.

Der durch Pfeil 4 dargestellte bidirektionale Datenaustausch zwischen den digital übertragenden Terminals TE1 und dem ISDN-Netz ist die Grundfunktion eines Netzabschlusses. Ein intelligenter Netzabschluß ermöglicht und steuert zusätzlich den durch Pfeil 5 dargestellten bidirektionalen Datenaustausch zwischen den analog übertragenden Terminals TE2 und dem ISDN-Netz.

Ferner wird erfindungsgemäß eine interne Vermittlung zum bidirektionalen internen Datenaustausch, d.h. außerhalb des ISDN-Netzes, zwischen den einzelnen Terminals durchgeführt.

Gemäß Pfeil 6 handelt es sich um Datenübertragung zwischen den digital übertragenden Terminals TE1, um Datenübertragung zwischen den digital übertragenden Terminals TE und den analog übertragenden Terminals TE2 gemäß Pfeil 7 sowie um Datenübertragung zwischen den analog übertragenden Terminals TE2, was durch Pfeil 8 veranschaulicht ist.

In Fig. 2 ist ein Blockschaltbild eines solchen Netzabschlusses dargestellt, dessen Komponenten auf einem Chip 14 integriert sind. Der Datenstrom zwischen der integrierten S-Schnittstelle 1, der integrierten U-Schnittstelle 2 , einem integrierten HDLC-Controller 11 sowie dem externen Codec-Filterbaustein 3 erfolgt über einen IOM-Datenbus 30 mit einer Taktrate von 1,536 MHz. An den Datenbus 30 ist ferner ein weiterer externer HDLC-Controller 12 angeschlossen.

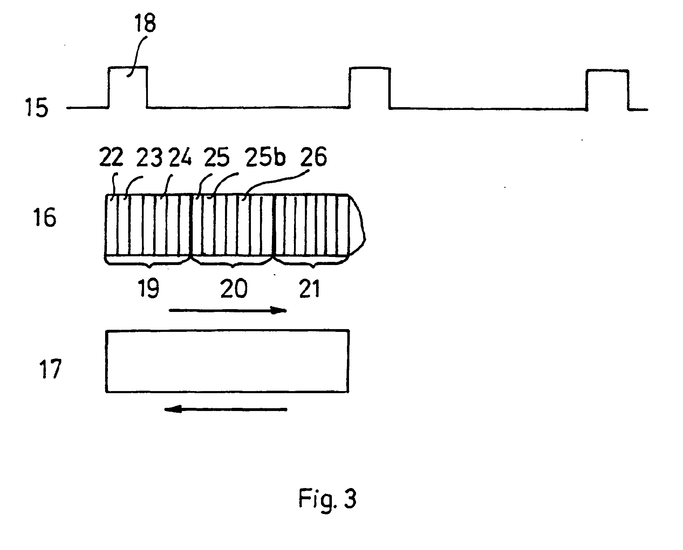

In Fig. 3 ist die an sich bekannte Rahmenstruktur des Datenbusses 30 dargestellt. Ein Rahmentaktsignal 15 gibt mit einem Taktimpuls 18 einen Rahmen für jeweils drei Hauptkanäle 19, 20, 21 vor. Der Takt arbeitet bevorzugt mit einer Frequenz von 8 kHz, so daß sich eine Rahmentaktdauer von 125 µsek ergibt. Im Fall des IOM-Busses werden diese Hauptkanäle 19, 20, 21 als IOM-Kanal 0, 1 bzw. 2 bezeichnet. Jeder Hauptkanal 19, 20, 21 ist in mehrere Zeitschlitze unterteilt, die jeweils Unterkanäle bilden und in welchen fest zugeordnet Nutzdaten und Steuerdaten übertragen werden. Im ersten Hauptkanal 19 werden in den ersten beiden Zeitschlitzen der B1-Kanal 22 und der B2-Kanal 23 gemäß ISDN für Nutzdaten übertragen. In einem weiteren Zeitschlitz erfolgt die Übertragung des ISDN D-Kanals 24 mit Steuerdaten.

Erfindungsgemäß sind in einem weiteren Hauptkanal, hier dem zweiten oder mittleren Hauptkanal 20, auf jeweils einem fest zugeordneten Zeitschlitz ein erster Unterkanal 25 und ein zweiter Unterkanal 25b zur internen Nutzdatenübertragung bei der vorstehend beschriebenen internen Vermittlung vorhanden. Auf einem weiteren fest zugeordneten Zeitschlitz des zweiten Hauptkanals 20 ist ferner ein dritter Unterkanal 26 zur Steuerdatenübertragung bei der internen Vermittlung vorhanden. Bevorzugt werden bei insgesamt sieben Zeitschlitzen die beiden ersten Zeitschlitze als Unterkanäle 25, 25b zur Nutzdatenübertragung und der fünfte Zeitschlitz als Unterkanal 26 zur Steuerdatenübertragung verwendet, wie in Fig. 3 veranschaulicht ist. Im Fall eines IOM-Busses handelt es sich demnach um die Unterkanäle IC1 und IC2 sowie IC5. Die Unterteilung und Zuordnung entspricht daher im wesentlichen dem ersten Hauptkanal 19.

Die Erzeugung der D-Kanaldaten zum ISDN-Netz, also in Upstreamrichtung 16, erfolgt mit dem integrierten HDLC-Controller 11. Die Erzeugung der D-Kanaldaten zum S-Bus, also in Downstreamrichtung 17, wird mit dem weiteren HDLC-Controller 12 durchgeführt. Um die Figur übersichtlich zu halten, ist die Busstruktur in Downstreamrichtung 17 nicht im einzelnen wiedergegeben. Sie entspricht der Busstruktur in Upstreamrichtung 16. Die teilnehmerseitigen B-Kanalquellen, die S-Schnittstelle 1 und der Codec-Filterbaustein 3, legen die B-Kanaldaten der aktiven Verbindungen wahlweise in Upstream- oder in Downstreamrichtung auf die programmierbaren Zeitschlitze im zweiten Unterkanal 20 im Datenbus 30.

Der D-Kanal zur Steuerung der externen Vermittlung, der im ersten Hauptkanal 19 liegt, wird vom internen HDLC-Controller 11 bedient. Der D-Kanal zu den digital übertragenden Terminals TE1 auf der S-Verbindung liegt im zweiten Hauptkanal 20 und wird von dem externen HDLC-Controller 12 gesteuert. Der Codec/Filter 3 führt die Analog/Digitalwandlung der Signale zu den analogen Terminals TE2 durch. Ein Mikrocomputer 13 dient zu Steuerungsund Aufzeichnungszwecken.

Der im System verwendete Takt von 1,536 MHz kann von der U-Schnittstelle 2 geliefert werden.

### Bezugszeichenliste

- 1: S-Schnittstelle
- 2: U-Schnittstelle
- 3: Codec/Filterbaustein
- 4 - 8: Pfeile für Datenfluß
- 10: Netzabschluß
- 11: interner HDLC-Controller
- 12: externer HDLC-Controller
- 13: Mikrocomputer
- 14: Chip
- 15: Rahmentakt
- 16: Upstream-Kanal
- 17: Downstream-Kanal
- 18: Puls des Rahmentakts
- 19 - 21: Rahmenkanäle
- 22: B1-Kanal
- 23: B2-Kanal
- 24: D-Kanal
- 25 - 26: Datenkanäle für Vermittlungsfunktion
- 30: Datenbus

## Patentansprüche

1. Verfahren zum Betreiben eines intelligenten ISDN-Netzabschlusses (10) mit Vermittlungsfunktion, mit einer S-Schnittstelle (1), einer U-Schnittstelle (2), mindestens einem Codec/Filterbaustein (3) und einem Datenbus (30) zu ihrer Verbindung, wobei an der S-Schnittstelle ein oder mehrere, digital übertragende Terminals (TE1) und am Codec-Filterbaustein (3) ein oder mehrere analog übertragende Terminals (TE2) angeschlossen sind,
**dadurch gekennzeichnet,**
**daß** der Datenstrom auf dem Datenbus (30) bei einer externen Vermittlung in einer Rahmenstruktur mit jeweils drei unmittelbar aufeinanderfolgenden Hauptkanälen (19, 20, 21) unterteilt ist,
**daß** im ersten Hauptkanal (19) der B1-Kanal (22), der B2-Kanal (23) sowie der D-Kanal (24) als Unterkanal auf fest zugeordneten Zeitschlitzen übertragen werden, wobei die Vermittlung zwischen der U-Schnittstelle (2) einerseits und der S-Schnittstelle (1) sowie dem Codec-Filterbaustein (3) andererseits ausschließlich über diese Unterkanäle (22, 23, 24) des ersten Hauptkanals (19) erfolgt,
**daß** in einem der weiteren Hauptkanäle (20) auf jeweils einem fest zugeordneten Zeitschlitz mindestens ein erster und/oder zweiter Unterkanal (25, 25b) zur Informationsdatenübertragung und auf einem weiteren fest zugeordneten Zeitschlitz ein dritter Unterkanal (26) zur Steuerdatenübertragung vorhanden ist,
**daß** jedes Terminal (TE1, TE2) bei einer internen Vermittlung zwischen einem digital übertragenden Terminal (TE1) und einem analog übertragenden Terminal (TE2) oder zwischen analog übertragende Terminals (TE2) die Informationsdaten ausschließlich auf diesen ersten Unterkanal (25, 25b) des weiteren Hauptkanals (20) legt,
und **daß** die Steuerdaten zur internen Vermittlung auf dem weiteren fest zugeordneten Zeitschlitz des dritten Unterkanals (26) des weiteren Hauptkanals (20) übertragen werden.

2. Verfahren nach Anspruch 1,
**dadurch gekennzeichnet,**
**daß** der weitere Hauptkanal (20) der mittlere der drei Hauptkanäle (19, 20, 21) ist und sieben Zeitschlitze aufweist, daß der erste und zweite Unterkanal (25, 25b) im ersten und zweiten fest zugeordneten Zeitschlitz (25, 25b) unmittelbar aufeinanderfolgend zu Beginn des weiteren Hauptkanals (20) liegen und daß der dritte Unterkanal (26) im fünften Zeitschlitz liegt.

3. Verfahren nach Anspruch 1 oder 2,
**dadurch gekennzeichnet,**
**daß** es im Duplex-Betrieb auf zwei Kanälen durchgeführt wird.

## Claims

1. Method for operation of an intelligent ISDN network termination (10) with a switching function, having an S interface (1), a U interface (2), at least one codec/filter module (3) and a databus (30) for its connection, with the S interface being connected to one or more terminals (TE1) which transmit digitally, and the codec filter module (3) being connected to one or more terminals (TE2) which transmit in analogue form,
**characterized in that**
the datastream on the databus (30) is subdivided, in the case of external switching, using a frame structure with in each case three immediately successive main channels (19, 20, 21),
**in that** the B1 channel (22), the B2 channel (23) and the D channel (24), as a sub-channel, are transmitted in permanently allocated time slots on the first main channel (19), with the switching between the U interface (2) on the one hand and the S interface (1) as well as the codec filter module (3) on the other hand being carried out exclusively via these subchannels (22, 23, 24) of the first main channel (19),
**in that** at least a first and/or second sub-channel (25, 25b) for information' data transmission is provided in in each case one permanently allocated time slot in one of the further main channels (20), and a third sub-channel (26) for control data transmission is provided in a further permanently allocated time slot,
**in that**, for internal switching between a terminal (TE1) which transmits digitally and a terminal (TE2) which transmits in analogue form, or between terminals (TE2) which transmit in analogue form, each terminal (TE1, TE2) places the information data exclusively on this first sub-channel (25, 25b) of the further main channel (20),
and **in that**, for internal switching, the control data is transmitted in the further permanently allocated time slot for the third sub-channel (26) of the further main channel (20).

2. Method according to Claim 1,
**characterized in that**
the further main channel (20) is the central one of the three main channels (19, 20, 21) and has seven time slots, **in that** the first and the second sub-channel (25, 25b) are located in the first and the second permanently allocated time slots (25, 25b) immediately successively at the start of the further main channel (20) and that the third sub-channel (26) is located in the fifth time slot.

3. Method according to Claim 1 or 2,
**characterized in that**
the method is carried out using the duplex mode on two channels.

## Revendications

1. Procédé pour la commande d'une terminaison réseau ISDN (10) intelligente avec fonction de transmission, comprenant une interface S (1) et une interface U (2), au moins un module codec/filtre (3) et un bus de données (30) pour leur liaison, un ou plusieurs terminaux à transmission numérique (TE1) étant connectés à l'interface S et un ou plusieurs terminaux à transmission analogique (TE2) étant connectés au module codec/filtre (3),
**caractérisé en ce que**,
le flux de données sur le bus de données (30) est divisé, lors d'une transmission externe, dans une structure de trame avec à chaque fois trois canaux principaux (19, 20, 21) se succédant immédiatement,
et que dans le premier canal principal (19), le canal B1 (22), le canal B2 (23) ainsi que le canal D (24) en tant que sous-canal, sont transmis sur des créneaux temporels affectés de façon fixe, la transmission entre l'interface U (2) d'un côté et l'interface S (1) ainsi que le module codec/filtre(3) de l'autre côté a lieu exclusivement via ces sous-canaux (22, 23, 24) du premier canal principal (19),
et que dans un des autres canaux principaux (20), il y a au moins un premier et/ou un deuxième sous-canal (25, 25b) pour la transmission de données d'information à chaque fois sur un créneau temporel affecté de façon fixe et sur un autre créneau temporel affecté de façon fixe, un troisième sous-canal (26) est présent pour la transmission de données de commande,
et que lors d'une transmission interne entre un terminal (TE1) à transmission numérique et un terminal (TE2) à transmission analogique ou entre terminaux (TE2) à transmission analogique, chaque terminal (TE1, TE2) place les données d'information exclusivement sur ce premier sous-canal (25, 25b) de l'autre canal principal (20),
et que les données de commande pour la transmission interne sont transmis sur l'autre créneau temporel affecté de façon fixe du troisième sous-canal (26) de l'autre canal principal (20).

2. Procédé selon la revendication 1,
**caractérisé en ce que**,
l'autre canal principal (20) est celui des trois canaux principaux (19, 20, 21) qui est au milieu et comprend sept créneaux temporels, que le premier et le deuxième sous-canaux (25, 25b) sont dans le premier et le deuxième créneaux temporels, affectés de façon fixe, se succédant immédiatement au début de l'autre canal principal (20) et que le troisième sous-canal (26) est dans le cinquième créneau temporel.

3. Procédé selon la revendication 1 ou 2,
**caractérisé en ce qu'**il est réalisé en mode duplex sur deux canaux.
